# EUROPÄISCHE PATENTSCHRIFT

(11) **EP 0 383 989 B1**
(45) Veröffentlichungstag und Bekanntmachung des Hinweises auf die Patenterteilung: **21.08.1996**
(21) Anmeldenummer: 89107863.6
(22) Anmeldetag: 29.04.1989
(51) Int. Cl.: G03C 1/79, B29C 59/04, B32B 27/10, B41F 19/02

(54) **Verfahren zur Kennzeichnung der Rückseite eines thermoplastbeschichteten Bildträgermaterials und danach hergestellter Bildträger**
Method for marking the reverse side of a picture carrier coated with a thermoplastic polymer, and picture carrier produced thereby
Procédé de marquage du verso d'un matériau support d'images revêtu d'un polymère thermoplastique et matériau support ainsi fabriqué

(30) Priorität: 24.02.1989 US 315444
(43) Veröffentlichungstag der Anmeldung: 29.08.1990
(73) Patentinhaber: Felix Schoeller jr. Papierfabrik GmbH & Co. KG, D-49086 Osnabrück (DE)
(72) Erfinder: Woodward, Antony Ian, Pulaski, N.Y. 13142 (US); Simpson, Stephan Michael, Clay, N.Y. 13041 (US)
(74) Vertreter: Minderop, Ralph H., Dr. rer. nat.

(56) Entgegenhaltungen:
- GB-A- 1 198 342
- US-A- 3 300 286
- US-A- 3 959 546
- PATENT ABSTRACTS OF JAPAN, Band 4, Nr. 132 (M-032), 17. September 1980; & JP-A-55 090 364
- DATABASE WPI, Accession Nr. 79-43241B [23], Derwent Publications Ltd, London, GB; & JP-A-54 053 525

## Beschreibung

Es ist bekannt, Bildträgermaterialien, zu denen polyolefinbeschichtete Basispapiere für Silbersalzfotografie, polyolefinbeschichtete Basispapiere für fotopolymerisierbare Schichten, Bildempfangsblätter für thermische Übertragungsverfahren oder polyolefinbeschichtete Unterlagen für Farbstoffdiffusionsverfahren gehören, zu markieren.

Mit Hilfe konventioneller Flexodruck- und Gravurdruck-Techniken werden der name des Herstellers oder andere Kennzeichnungen auf der Rückseite eines fotografischen polyolefinbeschichteten Basispapiers zunächst auf das Rohpapier gebracht und die bedruckte Seite anschließend mit klarem Polyethylen beschichtet.

Bei Abwesenheit von Titandioxid in der Rückseiten-Polyolefinbeschichtung erscheint das Druckbild klar. Die erforderliche Gesamtopazität wird im allgemeinen durch das Füllen des Rohpapiers und eine entsprechende Titandioxidzugabe in die Polyethylenbeschichtung der Vorderseite erreicht.

Bei vielen fotografischen Basispapieren wird jedoch eine sehr hohe Opazität verlangt, die eine Titandioxidzugabe auch in die Rückseitenbeschichtung erfordert. Durch diese Titandioxidzugabe wird jedoch die Lesbarkeit der Kennzeichnung beeinträchtigt oder ganz beseitigt.

Bei der Verwendung konventioneller Druckverfahren für diese Art der Kennzeichnung der Basispapiere treten vor allem zwei Nachteile auf. Erstens wird eine automatische Detektion von Fehlern mittels Laser-Technik schwierig, da diese von der Druckzeicheninterferenz beeinflußt werden kann. Zweitens können sich die Druckzeichen auf das endgültige auf der emulsionsbeschichteten Seite entstandene fotografische Bild fotochemisch störend auswirken.

Außerem erfordert die Verwendung konventioneller Druckfarben zusätzliche Schutzmaßnahmen, die eine Verschmutzung durch die Farben und eine Explosionsgefahr, bedingt durch das in den Farben enthaltene Lösungsmittel, verhindern sollen.

Zum Stand der Technik gehört ein Verfahren, bei dem zum Aufbringen verschiedener Muster und Symbole auf die Rückseite polyolefinbeschichteter Basispapiere ein Kühlzylinder mit speziell präparierter Oberfläche eingesetzt wird, der die Polyolefinextrusionsbeschichtung und die Kennzeichnung in einem Arbeitsgang ("in line") erlaubt. Ein solches Verfahren wird in der japanischen Patentschrift JP 86-021833 beschrieben. Das Polyethylen wird in Form eines Films durch einen Spalt zwischen einer Anpreßwalze und einem Kühlzylinder auf den Träger extrudiert. Die Oberfläche des Kühlzylinders weist inverse Muster von Buchstaben und Symbolen auf, die auf der Walzenoberfläche durch unterschiedliche Rauhigkeit ausgebildet sind, so daß sich die verschiedenen Strukturen in die Oberfläche des PE-Films einpressen.

Der Nachteil dieses Verfahrens liegt darin, daß bei der späteren Bearbeitung des nach diesem Verfahren gekennzeichneten und anschließend mit fotografischer Emulsion beschichteten Basispapiers eine Desensibilisierung der Emulsion beobachtet wird. Außerdem ist die Lesbarkeit der mit Hilfe des oben erwähnten Kühlzylinders aufgedruckten Zeichen nicht besonders gut. Nachteilig an diesem Verfahren ist weiterhin, daß die Polyolefinbeschichtungsmasse kein Titandioxid oder sonstige Pigmente enthält. Dies wirkt sich aus den bereits anfangs beschriebenen Gründen auf die Qualität des fotografischen Basispapiers aus.

Aufgabe der Erfindung ist es daher, ein Verfahren zur Kennzeichnung der Rückseite eines polyolefinbeschichteten Basispapiers bereitzustellen, das die obigen Nachteile nicht besitzt.

Gelöst wird diese Aufgabe durch ein Verfahren zur Kennzeichnung der Rückseite eines mit einem thermoplastischen Kunststoffharz beschichteten Bildträgers durch Schmelzextrusion eines Films in den Spalt zwischen Kühlzylinder und der zugekehrten Oberfläche des über eine Anpreßwalze laufenden Trägers, wobei die Oberflächen des Kühlzylinders mit Mustern, Symbolen oder Markierungen versehen sind, die dadurch gekennzeichnet sind, daß die Oberflächen der Muster, Symbole oder Markierungen höher oder tiefer gelegt sind als die restliche Oberfläche des Kühlzylinders und der am Kühlzylinder gemessene Höhenunterschied 3 bis 8 pm beträgt und daß auf den höherliegenden Flächen ein höherer Glanz erzeugt wird als auf den tieferliegenden Flächen des Kühlzylinders.

Überraschenderweise hat sich herausgestellt, daß das auf die Rückseiten-Polyolefinbeschichtung geprägte Muster nur bei Einhaltung eines bestimmten Höhen- und Glanzunterschieds zwischen der Kühlzylinderoberfläche einerseits und den darauf angebrachten Mustern oder Symbolen andererseits keine Eindrücke in der Vorderseite des beschichteten Basispapiers verursacht und auch keine Schleier oder Densibilisierungseffekte in der später auf die Vorderseite aufgetragenen fotografischen Emulsion hervorruft.

Darüber hinaus wird die erfindungsgemäße Wirkung bei Einhaltung einer bestimmten Auftragsmenge der Polyolefinbeschichtung sowie einem bestimmten Titandioxid-Gehalt in dieser Beschichtung verstärkt.

Vorzugsweise beträgt der Höhenunterschied 3 bis 6 µm. Der erfindungsgemäße Glanzunterschied, ausgedrückt durch einen Glanzunterschied zwischen der Oberfläche der in der Polyolefinbeschichtung des Basispapiers eingeprägten Muster oder Symbole und der die Muster umgebenden Fläche der Beschichtung darf nicht kleiner sein als 15, gemessen nach ASTM D 523 mit einem Meßkopf einer Maßgeometrie von 60° oder nicht kleiner als 25, gemessen mit einem Meßkopf einer Maßgeometrie von 85°.

Der bevorzugte Glanzunterschied bewegt sich im Bereich von 20 bis 60 (Meßwinkel von 60°) oder 30 bis 80 (Meßwinkel von 85°). Die erfindungsgemäße Auftragsmenge der Polyolefinbeschichtungsmasse beträgt 20 bis 60 g/m² und der Titandioxidgehalt in dieser Beschichtungsmasse 0 bis 15%. Die bevorzugte Auftragsmenge beträgt 25 bis 50 g/m².

Bei der erfindungsgemäßen Arbeitsweise wurden keine technischen Probleme hinsichtlich des Festklebens von Polyethylenteilchen an der Kühlzylinderoberfläche während des Beschichtens beobachtet.

Zur Polyolefinbeschichtung verschiedener Bildträgermaterialien kann beispielsweise Polyethylen in seiner LD- oder HD-Form sowie Polypropylen verwendet werden. Außerdem können zur Extrusionsbeschichtung auch andere thermoplastische Harze wie Polyester oder Polycarbonate verwendet werden.

Die thermoplastische Beschichtungsmasse kann auch zusätzlich ein Pigment enthalten. Als Pigment können Titandioxid in seiner Rutil- oder Anatas-Form sowie andere Buntpigmente wie Ruß oder Kobaltblau oder deren Mischungen eingesetzt werden. Der Bildträgerkern kann außer aus Papier auch aus einer Kunststoffolie, beispielweise einer Polyesterfolie bestehen.

Die Erfindung wird nachfolgend anhand der Zeichnungen und der Ausführungsbeispiele näher erläutert.

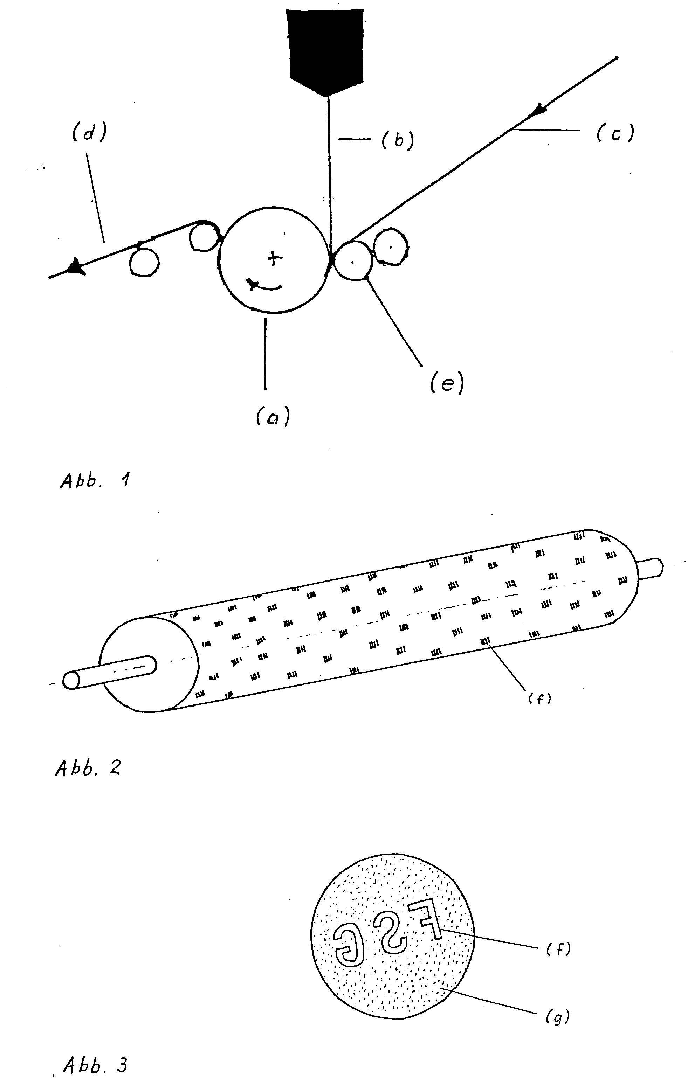

Fig. 1 ist eine schematische Ansicht einer allgemein bekannten Anlage zur Extrusionsbeschichtung. Wie aus Fig. 1 hervorgeht, läuft beispielsweise eine Papierbahn c noch durch einen Spalt, der von dem Kühlzylinder a und einer Anpreßwalze e gebildet wird. Der von der Anpreßwalze e erzeugte lineare Druck beträgt 4,4 bis 52,5 k N/m (25 bis 300 lb/in). Die Temperatur des Kühlzylinders a beträgt 10 bis 40°C.

Der Thermoplastfilm b wird vom Extruder in den Spalt hineinextrudiert, wobei er gleichzeitig mit einer Seite gegen das Papier gepreßt wird und daran haftet und auf der anderen Seite eine Abbildung der Oberflächenstruktur des Kühlzylinders erhält. Das so beschichtete fotografische Basispapier oder ein anderes für reprografische Zwecke vorgesehenes Material (Bildträgermaterial) d wird schließlich von dem Kühlzylinder a abgenommen und zu einer Aufwickelvorrichtung (nicht gezeigt) geführt.

In Fig. 2 ist die Ansicht eines Kühlzylinders mit einem vielfach wiederholten Muster f dargestellt.

Fig. 3 zeigt einen Ausschnitt aus der Oberfläche eines Kühlzylinders. Die Oberfläche des darauf zu sehenden Musters ist so gestaltet, daß sie einen höheren Glanz aufweist als die die Muster umgebende Fläche g.

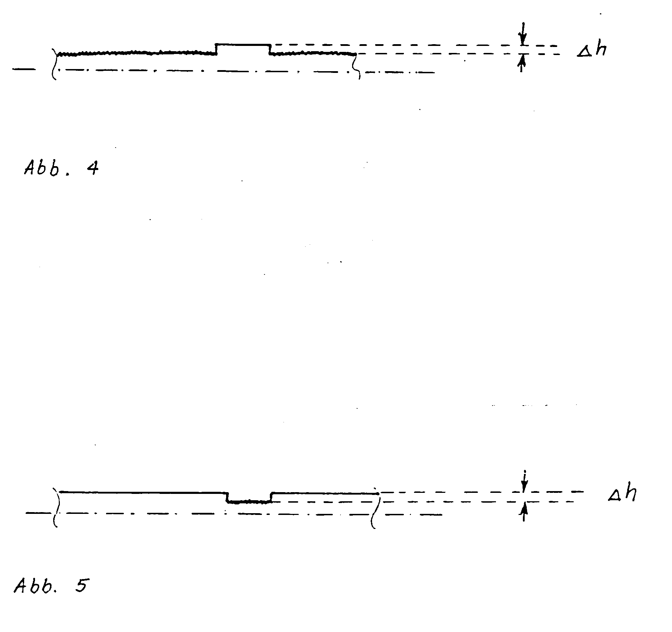

In Fig. 4 und 5 ist ein Schnitt durch ein einzelnes Muster dargestellt. Hier ist die erfindungsgemäße Höhendifferenz (Δ h) dargestellt. Die erhobenen Flächen haben immer einen höheren Glanz als die restliche Oberfläche. Die Zeichnungen sind nicht maßstabsgetreu dargestellt.

Die Kennzeichnung der Kühlzylinderoberfläche kann auf verschiedene Weise, beispielsweise durch Ätzen der Oberfläche des Stahlzylinders außerhalb der Musterfläche erzeugt werden, wodurch die Oberfläche des Musters höher zu liegen kommt, als die restliche Oberfläche des Kühlzylinders.

In alternativer Weise kann umgekehrt verfahren werden, wobei das Muster als Vertiefung auf der Zylinderoberfläche zu sehen ist. Nach dem Ätzvorgang wird der Kühlzylinder verchromt.

Die Erzeugung verschiedener Oberflächenstrukturen auf einem Metallzylinder ist beispielsweise aus der US-A-3 300 286 bekannt.

### Ausführungsbeispiele

### Beispiel 1(nicht erfindungsgemäß)

Ein in üblicher Weise hergestelltes Rohpapier mit einem Flächengewicht von 175 g/m² wurde durch eine Laborextrusionsanlage (Abb. 1) mit einem Kühlzylinder vom Typ A (Tab. 2) geschickt. Zur Extrusionsbeschichtung wurde eine Mischung aus 74% Polyethylen mit einer Dichte von 0,950 g/cm³ (Alathon 7250, Wz. der Fa. Du Pont) und 26% TiO₂/PE-Masterbatch (Typ XEC-8457, Fa. Nortech) eingesetzt. Der von der Anpreßwalze erzeugte lineare Druck betrug 10,5 kN/m (60 lbs/in) und die Temperatur des Kühlzylinders 20°C. Die Polyethylen-Auftragsmenge betrug 50 g/m². Das auf diese Weise beschichtete Basispapier wurde anschließend nach den in den Seiten 10 und 11 beschriebenen Methoden geprüft. Die Ergebnisse sind in Tab. 1 dargestellt.

### Beispiel 2

Rohpapiere mit verschiedenen Flächengewichten von 114 g/m². bis 175 g/m² wurden durch eine Laborextrusionsanlage (Abb. 1) mit einem Kühlzylinder vom Typ B (Tab. 2) geschickt. Zur Extrusionsbeschichtung wurde die gleiche Mischung wie in Beispiel 1 eingesetzt.
Die Menge der Polyethylenbeschichtungsmasse variierte von 18 bis 50 g/m². Die Ergebnisse der Versuche sind in Tab. 1 dargestellt.

### Beispiel 3

Ein Rohpapier mit einem Flächengewicht von 175 g/m² wurde durch eine Laborextrusionsanlage (Abb. 1) mit einem Kühlzylinder vom Typ C (Tab. 2) geschickt. Die sonstigen Versuchsbedingungen entsprachen Beispiel 1. Die Ergebnisse sind in Tab. 1 dargestellt.

### Beispiel 4

Ein Rohpapier mit einem Flächengewicht von 175 g/m² wurde durch eine Laborextrusionsanlage (Abb. 1) mit einem Kühlzylinder vom Typ D (Tab. 2) geschickt. Die sonstigen Versuchsbedingungen entsprachen Beispiel 1. Die Ergebnisse sind in Tab. 1 dargestellt.

### Vergleichsbeispiel

Ein Rohpapier mit einem Flächengewicht von 175 g/m² wurde, wie in Beispiel 1 mit einer Polyethylenbeschichtungsmasse beschichtet.

Der Kühlzylinder war vom Typ E (Tab. 2) und entsprach dem in der JP 86-21833 angewandten Zylinder. Die Ergebnisse sind in Tab. 1 dargestellt.

### Prüfmethoden zur Untersuchung der erfindungsgemäß beschichteten Basispapiere

### 1. Sensitometrische Untersuchungen

Proben der erfindungsgemäß polyolefinbeschichteten fotografischen Basispapiere (Streifen 9x20 cm) wurden mit einem herkömmlich emulsionierten Colorpapier in Kontakt gebracht, so daß die Seite mit dem in der Polyolefinschicht eingeprägten Muster auf der mit fotografischer Emulsion beschichteten Seite des Colorpapieres liegt.

Die so aufeinandergebrachten Streifen wurden in schwarz eingefärbte polyethylenbeschichtete Beutel eingepackt, mit einem Gewicht von 15 kg beschwert und für eine Woche bei 35 °C gelagert.

Danach wurden die Proben
- unbelichtet entwickelt, um einen eventuellen Schleier festzustellen,
- belichtet entwickelt, um eine eventuelle Desensibilisierung der Emulsion festzustellen.

### 2. Druckeinwirkung

Da ein polyolefinbeschichtetes fotografisches Basispapier zu Rollenware aufgewickelt wird, muß der innerhalb der Rolle entstehende Druck berücksichtigt werden. Dazu wurde eine Serie von Untersuchungen mit einer Laborpresse durchgeführt, um die Möglichkeit einer Übertragung des auf der Rückseite eingeprägten Musters auf die Vorderseite des Papiers zu prüfen.

Der in der Laborpresse angewandte Druck betrug ca. 1,5 kg/cm² und sollte in etwa dem innerhalb der Rolle zu erwartenden Druck entsprechen.

### 3. Glanzmessungen

Die Untersucnungen wurden mit dem Dr. Lange - Reflektometer in Anlehnung an die ASTM D 523 durchgeführt.

Die Messungen erfolgten mit einem Meßkopf mit einer Meßgeometrie von 60° für normalglänzende Oberflächen und 85° für matte Oberflächen.

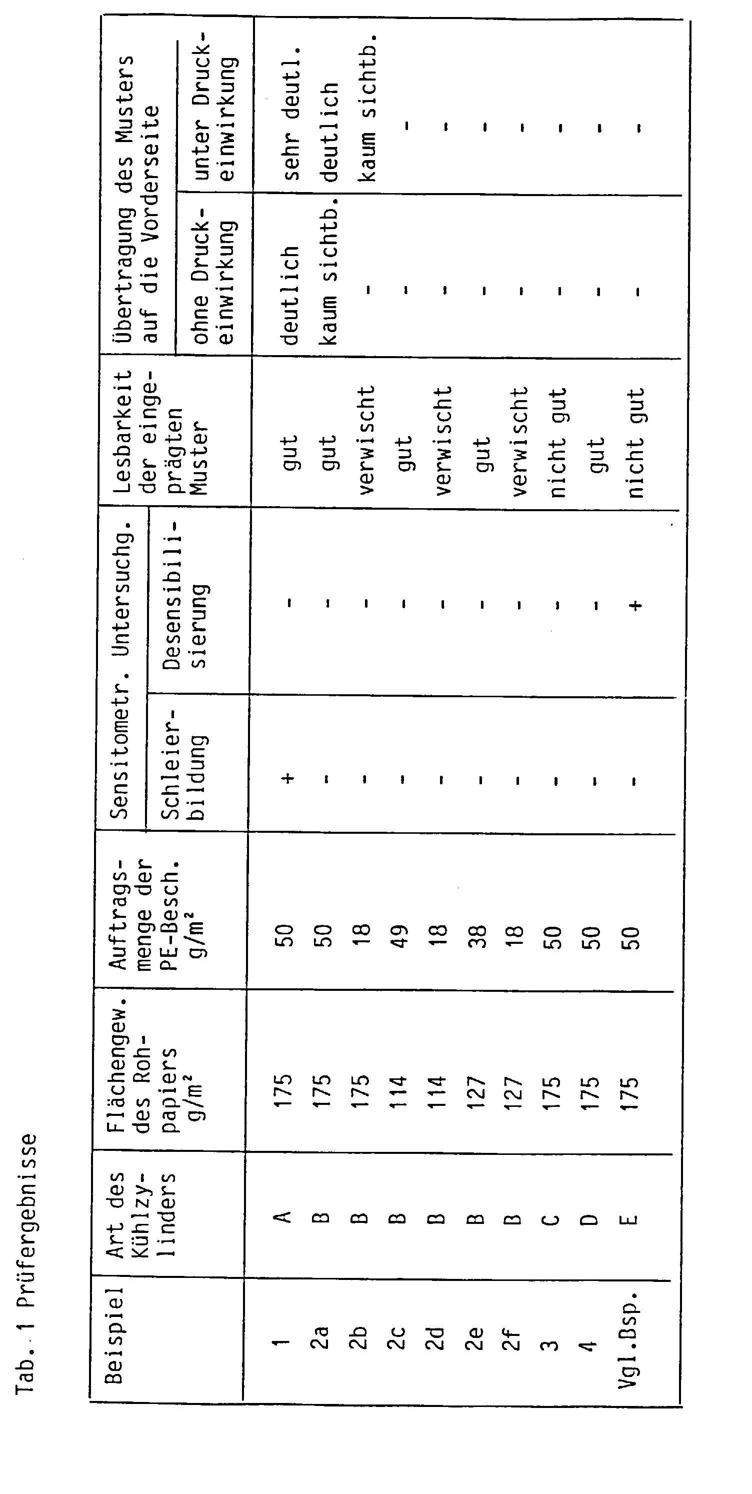

**Tab. 2**

| Art des angewandten Kühlzylinders | | | |
|---|---|---|---|
| Kühlzylinder | Höhenunterschied h (µm) | Glanzunterschied* | |
| | | bei 60° | bei 85° |
| A | 16 | 20 | 30 |
| B | 8 | 35 | 66 |
| C | 8 | 10 | 16 |
| D | 4 | 35 | 66 |
| E | 0 | 40 | 70 |
| nach JP 86- 21833 | | | |

| | | | |
|---|---|---|---|
| * Der Glanzunterschied wird am Papier bestimmt | | | |

## Patentansprüche

1. Verfahren zur Kennzeichnung der Rückseite eines mit einem thermoplastischen Kunststoffharz beschichteten Bildträgers durch Schmelzextrusion eines Films in den Spalt zwischen Kühlzylinder und der zugekehrten Oberfläche des über eine Anpreßwalze laufenden Trägers, wobei die Oberflächen des Kühlzylinders mit Mustern, Symbolen oder Markierungen versehen sind, dadurch gekennzeichnet, daß die Oberflächen der Muster, Symbole oder Markierungen höher oder tiefer gelegt sind als die restliche Oberfläche des Kühlzylinders und der am Kühlzylinder gemessene Höhenunterschied 3 bis 8 µm beträgt und daß auf den höherliegenden Flächen ein höherer Glanz erzeugt wird als auf den tieferliegenden Flächen des Kühlzylinders.

2. Verfahren nach Anspruch 1, dadurch gekennzeichnet, daß der Glanzunterschied zwischen der beschichteten Oberfläche und den darauf eingeprägten Mustern oder Symbolen nicht kleiner ist als 15, gemessen mit einem Meßkopf unter einem Winkel von 60° oder nicht kleiner als 25, gemessen unter einem Winkel von 85°C.

3. Verfahren nach Anspruch 1 oder 2, dadurch gekennzeichnet, daß der Glanzunterschied in einem Bereich von 20 bis 60 liegt, gemessen unter einem Winkel von 60°C oder in einem Bereich von 30 bis 80, gemessen unter einem Winkel von 85°.

4. Verfahren nach Anspruch 1 bis 3, dadurch gekennzeichnet, daß der am Kühlzylinder gemessene Höhenunterschied 3 bis 6 µm beträgt.

5. Verfahren nach Anspruch 1 bis 4, dadurch gekennzeichnet, daß die Thermoplastbeschichtungsmasse wenigstens Polyester, Polyethylen oder Polypropylen mit oder ohne Pigment enthält.

6. Verfahren nach Anspruch 5, dadurch gekennzeichnet, daß das Pigment Titandioxid, Ruß, Kobaltpigment oder ein anderes Buntpigment oder eine Mischung aus diesen ist.

7. Bildträgermaterial mit thermoplastischer Beschichtung, das auf der Rückseite mit Kennzeichen versehen ist, hergestellt nach einem Verfahren der Ansprüche 1 bis 6.

## Claims

1. A process for marking the reverse side of an imaging base paper coated with a thermoplastic synthetic resin by melt extrusion of a film into the gap between the chill cylinder roll and the exposed surface of the base paper running across a pressure roll wherein the surfaces of the chill cylinder roll are impressed with patterns, symbols or marks, characterized in that the surfaces of the patterns, symbols or marks are disposed higher or lower than the remaining surface of the chill cylinder roll and that the height level difference measured at the chill cylinder roll is between 3 and 8 µm and that a higher gloss is generated on the higher disposed surface areas than on the lower disposed surface areas of the chill cylinder roll.

2. A process according to claim 1, characterized in that the difference in gloss between the coated surface and the patterns or symbols impressed on it is not less than 15, measured with a measering head under an angle of 60° and not less than 25, measured under an angle of 85°.

3. A process according to claim 1 or 2, characterized in that the difference in gloss lies in a range of 20 to 60, measured under an angle of 60° or in a range of 30 to 80 measured under an angle of 85°.

4. A process according to claims 1 to 3, characterized in that the height level difference measured at the chill cylinder roll is between 3 and 6 µm.

5. A process according to claims 1 to 4, characterized in that the thermoplastic coating mass contains at least polyester, polyethylene or polypropylene with or without pigment.

6. A process according to claim 5, characterized in that the pigment is titanium dioxide, carbon black, cobalt pigment or another coloured pigment or a mixture thereof.

7. Imaging base paper with thermoplastic coating marked on the reverse side, produced by a process according to claims 1 to 6.

## Revendications

1. Procédé d'identification du verso d'un support d'image enduit d'une résine thermoplastique par extrusion à l'état fondu d'un film dans l'intervalle entre le cylindre refroidisseur et la surface opposée du support passant sur un cylindre de compression, dans lequel les surfaces du cylindre refroidisseur sont pourvues de motifs, de symboles ou de marquages, caractérisé en ce que les surfaces des motifs, des symboles ou des marquages sont plus hautes ou plus basses que le reste de la surface du cylindre refroidisseur et que la différence de hauteur mesurée sur le cylindre refroidisseur est comprise entre 3 et 8 µm et qu'un brillant plus élevé est créé sur les régions les plus élevées que sur les régions les plus basses du cylindre refroidisseur.

2. Procédé selon la revendication 1, caractérisé en ce que la différence de brillant entre la surface enduite et les motifs ou symboles imprimés sur celle-ci n'est pas inférieure à 15 quand on mesure avec une tête de mesure, avec un angle de 60° et n'est pas inférieure à 25 quand on mesure avec un angle de 85°.

3. Procédé selon la revendication 1 ou 2, caractérisé en ce que la différence de brillant se situe dans la gamme de 20 à 60 quand on mesure avec un angle de 60° ou se situe dans la gamme de 30 à 80 quand on mesure avec un angle de 85°.

4. Procédé selon les revendications 1 à 3, caractérisé en ce que la différence de hauteur mesurée sur le cylindre refroidisseur est comprise entre 3 et 6 µm.

5. Procédé selon les revendications 1 à 4, caractérisé en ce que la masse d'enduction thermoplastique contient au moins du polyester, du polyéthylène ou du polypropylène avec ou sans pigment.

6. Procédé selon la revendication 5, caractérisé en ce que le pigment est du dioxyde de titane, de la suie, un pigment au cobalt ou un autre pigment coloré ou encore un mélange de ceux-ci.

7. Matériau support d'image à revêtement thermoplastique, qui est pourvu d'identifications sur le verso, fabriqué selon un procédé conforme aux revendications 1 à 6.
